# EUROPÄISCHE PATENTANMELDUNG

(11) **EP 1 166 844 A2**
(43) Veröffentlichungstag der Anmeldung: **02.01.2002**
(21) Anmeldenummer: 01112041.7
(22) Anmeldetag: 23.05.2001
(51) Int. Cl.: B01D 53/00, B01D 53/73

(54) **Abtrennung von Metallschloriden aus gasförmigen Reaktionsgemischen der Chlorsilan-Synthese**

(30) Priorität: 20.06.2000 DE 10030251
(71) Anmelder: Degussa AG, 40474 Düsseldorf (DE); Wacker-Chemie GmbH, 81737 München (DE)
(72) Erfinder: Vendt, Bernd, 45739 Oer-Erkenschwick (DE); Köhler, Bernd, 01612 Leckwitz (DE); Schulz, Eberhard, 01587 Riesa (DE)

(57) **Zusammenfassung**

Die Erfindung betrifft ein Verfahren zur Abtrennung von Metallchloriden aus dem bei der Umsetzung von technischem Silizium mit Chlorwasserstoff entstehenden heißen, gasförmigen Reaktionsgemisch (Rohgas), bei dem man das Rohgas in eine im Kreis geführte Suspension von Metallchloriden in Chlorsilanen einleitet, die Temperatur des Rohgases von dessen Einleitungstemperatur bis zur Temperatur des bei der Einleitung entstehenden dreiphasigen Gas/Flüssigkeits/Feststoff-Gemisches zum Teil durch direkte, durch Verdampfung von Chlorsilanen bewirkte Kühlung und zum Teil durch indirekte Kühlung absenkt, einen Teil der entstandenen Suspension von Metallchloriden in flüssigen Chlorsilanen zur Einleitungsstelle des Rohgases zurückführt und aus dem anderen Teil der Suspension die Metallchloride abtrennt. Die Erfindung betrifft weiterhin einen Apparat (oder Kondensator), in dem das Rohgas zur Abscheidung von Metallchloriden und Chlorsilanen in eine Suspension von Metallchloriden in Chlorsilanen eingeleitet wird, sowie eine Filter- und Lösevorrichtung zur Trennung der Suspension von Metallchloriden in Chlorsilanen und zur Weiterbehandlung der abgetrennten Metallchloride.

## Beschreibung

Die Erfindung betrifft ein Verfahren zur Abtrennung von Metallchloriden aus den bei der Umsetzung von technischem Silizium und Chlorwasserstoff entstehenden gasförmigen Reaktionsgemischen und die Behandlung der abgetrennten Metallchloride bis zu einer wässerigen, salzsauren Metallchloridlösung. Die Erfindung betrifft weiterhin einen Apparat (oder Kondensator), in dem das Rohgas zur Abscheidung von Metallchloriden und Chlorsilanen in eine Suspension von Metallchloriden in Chlorsilanen eingeleitet wird, sowie eine Filter- und Lösevorrichtung zur Trennung der Suspension von Metallchloriden in Chlorsilanen und zur Weiterbehandlung der abgetrennten Metallchloride.

### 1. Stand der Technik

Es ist bekannt, daß technisches, metallische Verunreinigungen enthaltendes Silicium mit Chlorwasserstoff bei Temperaturen von 270 bis 1.000°C sowohl in Festbett- als auch in Wirbelschichtreaktoren zu Chlorsilanen umgesetzt werden kann. Man erhält ein gasförmiges Reaktionsgemisch, das vorwiegend, je nach der Reaktionstemperatur, aus einem Gemisch von Trichlorsilan und Tetrachlorsilan (Siliziumtetrachlorid) besteht. Die metallischen Verunreinigungen des Siliciums, hauptsächlich Eisen, Aluminium und Calcium, setzen sich zu den entsprechenden Chloriden um. Ein Teil dieser Chloride wird zusammen mit aus dem Reaktor ausgetragenem feinkörnigen Siliziumstaub, dessen Menge je nach Reaktortyp und -belastung sehr unterschiedlich ist, in nach dem Reaktor angeordneten Zyklonen oder Filterapparaten abgeschieden. Insbesondere werden Calcium- und Eisenchlorid bei der Abkühlung des gasförmigen Reaktionsgemisches überwiegend auf den feinen Siliziumteilchen als gemisches überwiegend auf den feinen Siliziumteilchen als feste Metallchloride abgeschieden und können so leicht mit dem Staub ausgetragen werden. Der restliche Anteil der Metallchloride, überwiegend Aluminiumchlorid, verbleibt in Dampfform in dem abgekühlten gasförmigen Reaktionsgemisch.

Insbesondere Aluminiumchlorid neigt dazu, sich bei Temperaturen unterhalb von etwa 150°C, die zur Kondensation der Chlorsilane unter Atmosphärendruck angewandt werden müssen, als fester Belag in Rohrleitungen, auf Kühlflächen oder sonstigen Apparateflächen abzuscheiden. Der Stand der Technik sieht deshalb verschiedene Lösungen vor, um die Kondensation der Chlorsilane trotz dieser Neigung zur Feststoffabscheidung möglichst störungsarm durchzuführen und auch das anfallende Aluminiumchlorid möglichst elegant abzutrennen. Bei einem bekannten Verfahren wird die Kondensation in einer ersten Stufe durch indirekte Kühlung, die üblicherweise mittels Kühlwasser als Kühlmedium erfolgt, in stehenden Rohrbündelwärmeüberträgern durchgeführt, die von unten von dem metallchloridhaltigen, gasförmigen Reaktionsgemisch durchströmt werden. Das nach unten abfließende Kondensat soll das als Feststoff ausgefallene Metallchlorid wegspülen und die Wärmeaustauschflächen frei halten. Zur Vermeidung von Verstopfungen am Gaseintritt werden an diesen besonders kritischen Stellen oftmals Freistoßvorrichtungen eingebaut, die den Strömungsquerschnitt möglichst lange freihalten sollen. Aus den Suspensionen von Metallchloriden in Chlorsilanen, die durch Kondensation entstehen, müssen die Metallchloride abgetrennt werden.

Nach DE 629 853 wird das metallchloridhaltige dampfförmige Reaktionsgemisch in eine Schmelze eingeleitet, die aus einem Aluminiumchlorid/Alkalichlorid-Gemisch besteht und vor allem Aluminumchlorid und Eisenchlorid weitgehend zurückhält. Die Chlorsilane werden durch Kondensation der weitgehend Metallchlorid-freien Dämpfe gewonnen.

Bei einem weiteren bekannten, mit indirekter Kühlung arbeitenden Verfahren wird das metallchloridhaltige dampfförmige Reaktionsgemisch durch einfache Doppelmantelkühler geleitet. Man erhält wiederum eine Suspension von Metallchloriden in Chlorsilanen, aus denen die Metallchloride abgetrennt werden müssen. Auf den Kühlflächen wächst jedoch nach und nach ein Teil der abgeschiedenen Metallchloride auf, wodurch sich der Strömungsquerschnitt entsprechend verringert. Wenn ein bestimmter Füllungsgrad erreicht wird, leitet man das Reaktionsgemisch auf einen gleichartigen Parallelkühler, entfernt den Metallchloridbelag durch Spülen mit Wasser und trocknet anschließend den Kühler. Diese Operation ist mit einem häufigen Ausund Wiedereinbau des Kühlers verbunden, ermöglicht aber immerhin einen quasi-kontinuierlichen Betrieb.

Schließlich ist ein kontinuierliches Verfahren bekannt, bei dem das dampfförmige, Metallchloride enthaltende Reaktionsgemisch in flüssige Chlorsilane eingeleitet wird und die abgeschiedenen festen Metallchloride von den flüssigen Chlorsilanen abgetrennt werden. Bei einer bestimmten Ausführungsform dieses Verfahrens wird das dampfförmige, Metallchloride enthaltende Reaktionsgemisch (Rohgas) mit einer Temperatur, die beispielsweise etwa 300°C betragen kann, mit einem vertikal gerichteten, feinzerteilten Strom von Chlorsilanen in innige Berührung gebracht. Als Chlorsilane verwendet man zweckmäßig das Reaktionsprodukt der Chlorsilan-Synthese, das z.B. mit einer Temperatur von 40 bis 50°C eingesetzt wird. Ein Teil der Chlorsilane (insbesondere das niedrig siedende Trichlorsilan) verdampft, das Rohgas wird entsprechend abgekühlt, und die Metallchloride scheiden sich als Feststoffe in den flüssigen Chlorsilanen ab. Das Gemisch aus abgekühltem Rohgas und Metallchloride enthaltenden flüssigen Chlorsilanen gelangt in ein Trenngefäß, aus dessen oberem Teil die vorwiegend mit leichter siedenden Chlorsilandämpfen beladene Gasphase abgezogen wird. Aus dem unteren Teil des Trenngefäßes wird ein Teil der flüssigen Chlorsilan-Phase, in der die höhersiedenden Chlorsilane angereichert sind und die die suspendierten Metallchloride enthält, abgezogen. Die Metallchloride werden abgetrennt, und die flüssige Phase wird durch Destillation auf Chlorsilane aufgearbeitet. Ein anderer Teil der flüssigen Chlorsilan-Phase wird als Rücklauf in eine Kolonne geführt, in der aus der erwähnten, vorwiegend mit leichter siedenden Chlorsilanen beladenen Gasphase die mitgeführten Chlorsilane weitgehend ausgewaschen werden. Aus der verbleibenden Gasphase werden die darin noch immer in erheblichen Mengen enthaltenen, vorwiegend leichter siedenden Chlorsilane durch Tieftemperaturkühlung abgeschieden und zum einen Teil durch Destillation auf Chlorsilane aufgearbeitet, gegebenenfalls zusammen mit der aus dem unteren Teil des Trenngefäßes abgezogenen und von Metallchloriden befreiten Chlorsilan-Phase, zum anderen Teil als Rücklauf in die erwähnte Kolonne zurückgeführt.

### 2. Nachteile der Verfahren nach dem Stand der Technik

Soweit bei den Verfahren nach dem Stand der Technik das Rohgas indirekt gekühlt wird, ist es erforderlich, die Kühler schon nach relativ kurzer Betriebszeit wegen der unzureichenden Kühlleistung infolge von Metallchlorid-Abscheidungen, die bis zu Verstopfungen gehen, außer Betrieb zu nehmen. Die Reinigung der Kühler ist aufwendig und sowohl unter Umweltschutz- als auch unter Arbeitssicherheitsaspekten problematisch. Zunächst müssen die brennbaren Chlorsilandämpfe sorgfältig entfernt werden. Sodann muß die Reinigung der Kühlflächen durch Behandlung der Chlorsilan-haltigen Abscheidungen mit Wasser sehr vorsichtig geschehen, da die Hydratisierung des Aluminiumchlorids explosionsartig erfolgen kann. Zudem müssen Vorkehrungen getroffen werden, um Emissionen von Chlorsilanen und/oder Chlorwasserstoff zu vermeiden. Das Verfahren nach DE 629 853 hat den Nachteil, daß die Schmelze häufig erneuert werden muß, wozu ständig oder häufig ein Teil der im Kreis geführten Schmelze abgezogen und aufgearbeitet wird. Die Arbeitsweise, bei der der Rohgasstrom in flüssiges Chlorsilan eingeleitet wird, erfordert eine aufwendige Kreislaufführung großer Mengen an flüssigen Chlorsilanen.

### 3. Aufgaben der Erfindung

Eine Aufgabe der Erfindung besteht darin, ein Verfahren bereitzustellen, nach dem sich Metallchloride aus den gasförmigen Reaktionsgemischen der Synthese von Chlorsilanen aus technischem, metallische Verunreinigungen enthaltenden Silizium und Chlorwasserstoff bei langen Betriebszeiten und ohne häufige Betriebsunterbrechungen zuverlässig abscheiden lassen, das keine aufwendige Erneuerung und Aufarbeitung von Metallsalzschmelzen erfordert und die Kreislaufführung großer Mengen an Chlorsilanen vermeidet. Weitere Aufgaben und Vorteile der Erfindung werden sich aus der nachfolgenden Beschreibung ergeben.

### 4. Zeichnungen

Die beigefügte Figur 1 stellt ein Schema des erfindungsgemäßen Verfahrens zur Abtrennung von Metallchloriden aus den bei der Umsetzung von technischem Siliziummetall mit Chlorwasserstoff entstehenden gasförmigen Reaktionsgemischen (Rohgas) dar. Figur 2 ist die Darstellung eines geeigneten Apparates, in dem ein Teilschritt des genannten Verfahrens ausgeführt wird, nämlich die Einleitung des Rohgases in eine Suspension von Metallchloriden in flüssigem Chlorsilan sowie die indirekte Kühlung des entstehenden Dreiphasen-Gemisches. Figur 3 zeigt eine mögliche Ausgestaltung der Filter- und Lösevorrichtung, mit der in einem weiteren Teilschritt des Verfahrens die suspendierten Metallchloride von den flüssigen Chlorsilanen abgetrennt und in eine wäßrige Lösung überführt werden.

### 5. Kurzbeschreibung der Erfindung

Ein Gegenstand der Erfindung ist ein vorteilhaftes Verfahren zur Abtrennung von Metallchloriden aus dem bei der Umsetzung von technischem Silizium mit Chlorwasserstoff entstehenden heißen, gasförmigen Reaktionsgemisch (Rohgas), bei dem man das Rohgas in eine im Kreis geführte Suspension von Metallchloriden in Chlorsilanen einleitet, die Temperatur das Rohgases von dessen Einleitungstemperatur bis zur Temperatur des bei der Einleitung entstehenden dreiphasigen Gas/Flüssigkeits/Feststoff-Gemisches zum Teil durch direkte, durch Verdampfung von Chlorsilanen bewirkte Kühlung und zum Teil durch indirekte Kühlung absenkt, einen Teil der entstandenen Suspension von Metallchloriden in flüssigen Chlorsilanen zur Einleitungsstelle von Rohgas zurückführt und aus dem anderen Teil der Suspension die Metallchloride abtrennt. Diese Trennung erfolgt zweckmäßig unter Druck in einer Filtervorrichtung.

Ein anderer Gegenstand der Erfindung ist eine zweckmäßige Ausgestaltung dieses Verfahrens, bei der man die festen Metallchloride aus ihrer Suspension in Chlorsilanen abtrennt, indem man die Suspension unter Luft- und Feuchtigkeitsausschluß in einer inertisierten Zone, zweckmäßig unter Druck, in eine feste und eine flüssige Phase trennt, die feste Phase in einer inertisierten Zone zerkleinert, die zerkleinerte feste Phase einer Lösungszone zuführt, in der die Metallchloride zu einer wäßrigen Metallchlorid-Lösung gelöst werden, und aus der flüssigen Phase durch Destillation die einzelnen Chlorsilane gewinnt.

Ein noch anderer Gegenstand der Erfindung ist ein Apparat, (oder Kondensator), in dem die Kondensation der Chlorsilane und der Metallchloride des Rohgases stattfindet und der gekennzeichnet ist durch ein Hohlgefäß **17** mit vorzugsweise zylindrischem Querschnitt und vorzugsweise einer konischen Verjüngung im unteren Teil; ein äußeres Umlaufrohr **18**; einen Rohgaseinleitungsstutzen **19**; einen in dem Hohlgefäß **17** angeordneten Wärmetauscher **20**; einen Überlaufstutzen **21** und einen Gasabzugstutzen **22**.

Ein weiterer Gegenstand der Erfindung ist eine Filter- und Lösevorrichtung, mit der in flüssigen Chlorsilanen suspendierte feste Metallchloride abgetrennt und in eine wäßrige Lösung überführt werden können, gekennzeichnet durch einen gasdichten Filterraum **12**; eine darin eingeschlossene Filtervorrichtung **6**; eine Zuführung für die Suspension **5**; einen Abzug für flüssige Chlorsilane **7**; eine Inertgasschleuse **13**; einen Zerkleinerer **14** für den Filterkuchen **8**; eine Fördervorrichtung **15** für den zerkleinerten Filterkuchen **8**; ein Lösegefäß **9** mit einer Zuführung **16** für Wasser oder Salzsäure und einem Abzug für die saure Metallsalzlösung **11**.

Weitere Gegenstände der Erfindung werden sich aus der nachfolgenden Beschreibung der Erfindung ergeben.

### 6. Ausführliche Beschreibung der Erfindung

### 6.1 Beschreibung des Verfahrens

Das erfindungsgemäße Verfahren kann halbkontinuierlich durchgeführt werden, wobei das Rohgas kontinuierlich in die flüssigen Chlorsilane eingeleitet und die Suspension der Metallchloride in den Chlorsilanen absatzweise getrennt wird, z.B. in einer Filterpresse oder mittels eines Kerzenfilters. In diesem Fall kann man ein Puffergefäß vorsehen, in dem die Suspension aufgefangen wird, während das Filter geleert wird. Alternativ kann man auch zwei Filter parallel anordnen, von denen eines die Suspension filtert, während das andere geleert wird. Das Verfahren nach der Erfindung läßt sich auch vollkontinuierlich gestalten, indem man z.B. als Trennvorrichtung für die Suspension eine Schälzentrifuge einsetzt.

Als Edukte dienen die gasförmigen Reaktionsgemische (Rohgas) der zuvor beschriebenen bekannten Umsetzung von technischem Silizium mit Chlorwasserstoff. Der enthaltene Siliziumstaub sowie ein Teil der Metallchloride können, wie zuvor erwähnt, abgeschieden werden, bevor das Rohgas erfindungsgemäß behandelt wird. Wenn dieser Schritt entfällt, findet sich in der Suspension der Metallchloride in Chlorsilanen zusätzlich Siliziumstaub. Das Rohgas enthält, je nach den Reaktionsbedingungen, im allgemeinen 2 bis 50 Gew.-% nicht umgesetzten Chlorwasserstoff. Der Rest setzt sich überwiegend aus Wasserstoff und Chlorsilanen zusammen, unter denen wiederum Trichlorsilan und Tetrachlorsilan (Siliziumtetrachlorid) weit überwiegen. Weiterhin ist neben Eisen(III)-chlorid und Calciumchlorid vor allem das problematische, weil relativ leichtflüchtige und schwierig abzuscheidende Aluminiumchlorid vorhanden. Der Gehalt der gasförmigen Reaktionsgemische an Metallchloriden beträgt im allgemeinen 0,1 bis 4 Gew.-%, bezogen auf Chlorsilane. Siliziumstaub fällt gegebenenfalls in Mengen von 1 bis 5 Gew.-% an, bezogen auf Chlorsilane.

Das Verfahren nach der Erfindung wird im allgemeinen unter Atmosphärendruck oder unter erhöhtem Druck von bis zu etwa 5 bar durchgeführt. Das Rohgas tritt, gegebenenfalls nach Vorkühlung, in der Regel mit einer Temperatur (Einleitungstemperatur) von 135 bis 200°C in das Verfahren ein.

Das Rohgas wird erfindungsgemäß in eine im Kreis geführte Suspension von Metallchloriden in Chlorsilanen eingeleitet. Die Chlorsilane sind weit überwiegend die hauptsächlichen Reaktionsprodukte der Chlorsilan-Synthese, d.h. Trichlorsilan und Tetrachlorsilan. Vorteilhaft wird das Rohgas mit hoher Geschwindigkeit und zweckmäßig mit einer solchen Geschwindigkeit und in einer solchen Menge pro Zeiteinheit in die Suspension eingeleitet, daß im Kreislauf eine Lineargeschwindigkeit des entstehenden Gas/Flüssigkeits/Feststoff-Gemisches von 2 bis 8 m/s resultiert. Der Kreislauf der Chlorsilane kann durch entsprechend gerichtete Einleitung des Rohgases - das System arbeitet dann nach dem Prinzip der Mammutpumpe - in das zirkulierende Flüssigkeit/Feststoff-Gemisch sowie des entstehenden Gas/Flüssigkeit/Feststoff-Gemisches in das Hohlgefäß **17** des Kondensators bewirkt werden.

Beim Einleiten in die Suspension von Metallchloriden in flüssigen Chlorsilanen wird das Rohgas zunächst direkt gekühlt, und zwar durch Verdampfen vorzugsweise der niedriger siedenden Chlorsilane, insbesondere von Trichlorsilan, die in der im Kreis geführten Suspension von Metallchloriden in flüssigen Chlorsilanen vorliegen. Dabei kondensiert ein Teil der im Rohgas enthaltenen Chlorsilane, insbesondere höher siedendes Siliziumtetrachlorid. Weiterhin scheiden sich die im Rohgas enthaltenen Metallchloride in fester Form ab. Es entsteht ein dreiphasiges Gemisch, das eine Suspension von Feststoffen (Metallchloride und gegebenenfalls Siliziumstaub) in flüssigen Chlorsilanen sowie die noch gasförmigen Bestandteile des Rohgases umfaßt. Dieses dreiphasige Gemisch durchströmt dann eine Kühlzone mit indirekter Kühlung und trennt sich danach in eine Gasphase, die nicht kondensierte Chlorsilane sowie die übrigen gasförmigen Betandteile des Rohgases enthält, und eine Suspension von Metallchloriden in Chlorsilanen.

In beiden Kühlzonen herrscht ein Siedegleichgewicht, so daß die Temperaturen im gesamten System, einschließlich der im Kreis geführten Suspension ähnlich sind. Sie liegen bei einer Arbeitsweise unter Atmosphärendruck in der Regel zwischen 30 und 60°C. Der überschießende Wärmeinhalt des Rohgases und die Kondensationswärme der verflüssigten Chlorsilane werden letztendlich durch die indirekte Kühlung abgeführt, also an die Kühlflüssigkeit, in der Regel Wasser, abgegeben. Die erforderliche Menge pro Zeiteinheit und die Temperatur der Kühlflüssigkeit werden entsprechend bemessen; sie lassen sich aus den relevanten Parametern des Rohgases, der Kühlflüssigkeit und des Wärmetauschers, der die indirekte Kühlung bewirkt, unschwer errechnen.

Es ist ein wichtiges Merkmal des Verfahrens nach der Erfindung, daß das Rohgas zunächst mit flüssigen Chlorsilanen (in denen Metallchloride suspendiert sind) in Berührung kommt und durch Verdampfung vorzugsweise der niedrig siedenden Chlorsilane direkt gekühlt wird, worauf eine indirekte Kühlung erfolgt. Überraschenderweise treten praktisch keine Abscheidungen von Metallchloriden auf den Kühlflächen des Wärmetauschers oder gar Verstopfungen auf, wie dies bei den Verfahren nach dem Stand der Technik geschieht, die mit indirekter Kühlung arbeiten.

Die von der Suspension von Metallchloriden in Chlorsilanen abgetrennte Gasphase enthält noch erhebliche Mengen an Chlorsilanen, überwiegend leichter flüchtige Chlorsilane, die in üblicher Weise durch gegebenenfalls mehrstufige Abkühlung auf Temperaturen bis zu -70°C kondensiert und abgetrennt werden können. Der verbleibende Chlorwasserstoff kann in Wasser zu Salzsäure absorbiert oder in üblicher Weise durch nachfolgende Verdichtung/Kondensation und Destillation auf wieder einsetzbaren Chlorwasserstoff aufgearbeitet werden. Der Wasserstoff kann abgefackelt oder zur Energieerzeugung verwandt werden.

Aufgrund des Dichteunterschieds zwischen der Gasphase und der Suspension von Metallchloriden in Chlorsilanen kann nach dem Eintritt des erwähnten Dreiphasengemisches in das Hohlgefäß des Kondensators ein Teil der Suspension weitgehend frei von gasförmigen Bestandteilen zur Einleitungsstelle des Rohgases zurückgeführt werden. Der Gehalt dieser Suspension an Metallchloriden kann in weiten Grenzen schwanken und liegt im allgemeinen bei 0,1 bis 8 Gew.-%. Die Suspension wird, wie bereits erwähnt, zweckmäßig mit einer Lineargeschwindigkeit von 2 bis 8 m/s zurückgeführt, wodurch eine Ablagerung von Metallchloriden in dem äußeren Umlaufrohr **18** vermieden wird. Die Lineargeschwindigkeit läßt sich, wie zuvor beschrieben, durch die in der Zeiteinheit zugeführte Rohgasmenge und deren Einleitungsgeschwindigkeit steuern.

Der restliche Teil der Suspension, mit gleichen Gehalten an Metallchloriden, wird nach Durchströmen der Zone indirekter Kühlung und Abtrennung der Gasphase einer Vorrichtung zugeführt, in der die festen Metallchloride von den flüssigen Chlorsilanen getrennt werden.

Ein vorteilhaftes Verfahren zur Abtrennung der Metallchloride ist in der gleichzeitig anhängigen deutschen Patentanmeldung 100 30 252 beschrieben. Dabei werden die festen Metallchloride aus ihrer Suspension in Chlorsilanen abgetrennt, indem man die Suspension unter Luft- und Feuchtigkeitsausschluß in einer inertisierten Zone unter Druck filtriert, den Filterkuchen in einer inertisierten Zone zerkleinert und den zerkleinerten Filterkuchen einer Lösungszone zuführt, in der die Metallchloride zu einer wäßrigen Metallchlorid-Lösung gelöst werden. Da Trichlorsilan an der Luft brennbar ist und alle Chlorsilane hydrolyseempfindlich sind, befindet sich die Filtervorrichtung in einem gasdichten Raum, der Luft und Luftfeuchtigkeit ausschließt und während des Betriebs mit einem trockenen Inertgas, wie Stickstoff oder Argon, gefüllt ist. Das Filtrat kann durch Destillation in die einzelnen Chlorsilane zerlegt werden. Der Filterkuchen ist in der Regel von ziemlich fester Beschaffenheit. Es ist daher zweckmäßig, ihn über eine wiederum inertisierte Zone (oder Schleuse) einer Zerkleinerungsvorrichtung zuzuführen. Die Schleuse trennt den Filterraum mit der Filtervorrichtung, der von Feuchtigkeit frei gehalten werden muß, von den Folgezonen, in denen es auf Feuchtigkeitsausschluß nicht mehr ankommt. Die Ausgestaltung derartiger Schleusen ist dem Fachmann bekannt.

Der zerkleinerte Filterkuchen wird in eine Zone transportiert, in der die Metallsalze in Wasser oder verdünnter Salzsäure zu einer wäßrigen Metallsalz-Lösung gelöst werden, die in der Regel 0,1 bis 1,0 Gew.-% Metallsalz enthält und ohne weiteres einer Abwasserbehandlung zugeführt werden kann.

### 6.2 Beschreibung des Verfahrensschemas, der Apparate und Vorrichtungen

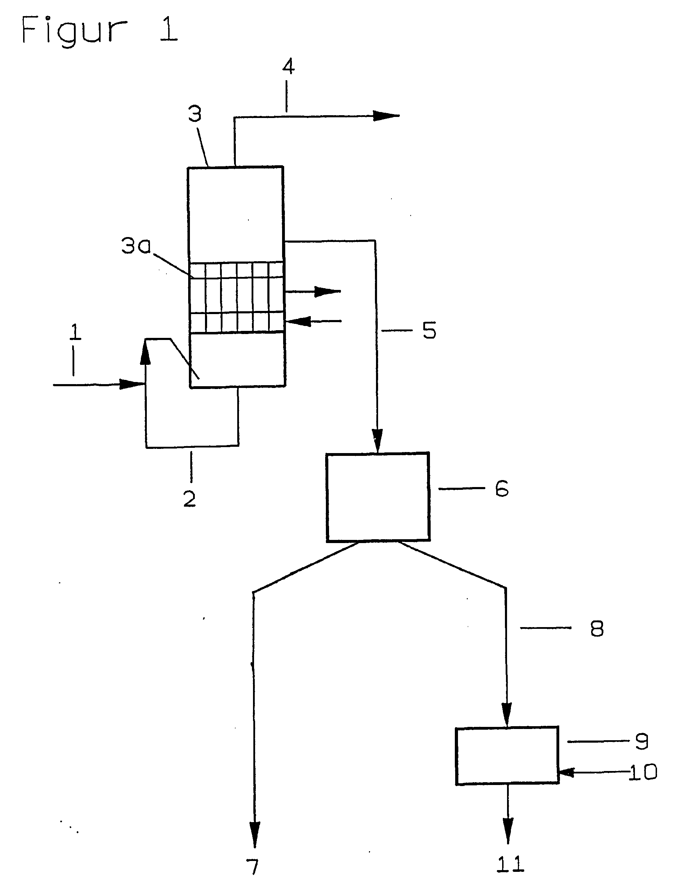

In der Figur 1 ist ein Schema des Verfahrens nach der Erfindung dargestellt. Das Rohgas **1** aus der Chlorsilansynthese wird in die Suspension von Metallchloriden in flüssigen Chlorsilanen eingeleitet, die in einem Umlauf **2** zirkuliert, der teils außerhalb, teils innerhalb der Kondensationszone **3** liegt. In einer Wärmetauschzone **3a** innerhalb der Kondensationszone **3** wird das durch Einleitung des Rohgases entstehende dreiphasige Gemisch aus einer Suspension von Metallchloriden in Chlorsilanen und nicht kondensierten gasförmigen Anteilen des Rohgases **1** mit einer Kühlflüssigkeit indirekt gekühlt. Ein Teil der Suspension wird über den Umlauf **2** weitgehend frei von gasförmigen Anteilen zur Einleitungsstelle des Rohgases **1** zurückgeführt. Im oberen Teil der Kondensationszone **3** trennen sich die noch gasförmigen Anteile **4** des Rohgases **1** von der Suspension. Aus den gasförmigen Anteilen **4** werden durch Tieftemperaturkondensation (nicht dargestellt) die darin enthaltenen Chlorsilane abgetrennt.

Der Überlauf **5** ist der Teil der Suspension aus Metallchloriden in Chlorsilanen, der auf Chlorsilane aufgearbeitet wird. Er wird der Fest/Flüssig-Trennung **6** zugeführt. Die flüssige Phase **7** (Chlorsilane) wird durch Destillation (nicht dargestellt) in die verschiedenen Chlorsilane zerlegt, vorteilhaft zusammen mit den aus den gasförmigen Anteilen durch Tieftemperaturkondensation gewonnenen Chlorsilanen. Die feste Phase **8** (Metallchloride) gelangt in die Lösungszone **9**, wo sie in Wasser oder wäßrige Salzsäure **10** eingetragen wird. Die wäßrige Lösung der Metallsalze **11** kann einer Abwasserbehandlung zugeführt werden.

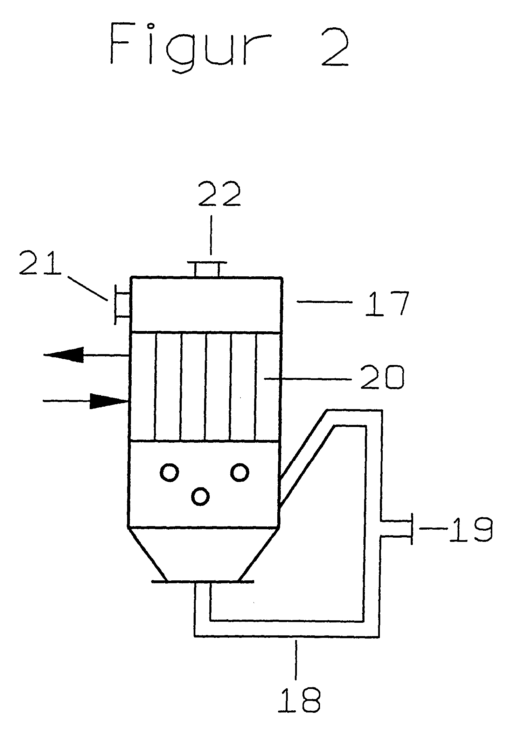

Figur 2 stellt einen Apparat (oder Kondensator) dar, in dem die Einleitung des Rohgases in die Suspension von Metallchloriden in Chlorsilanen sowie die Kondensation der Chlorsilane und der Metallchloride stattfindet und der gekennzeichnet ist durch ein Hohlgefäß **17** mit vorzugsweise zylindrischem Querschnitt und vorzugsweise einer konischen Verjüngung im unteren Teil. Dieses Hohlgefäß kann, ebenso wie die anderen Teile des Apparates, aus Normalstahl bestehen. Der Behälter hat ein außen liegendes Umlaufrohr **18**, in dem eine Suspension von Metallchloriden in Chlorsilanen zirkuliert. An dem Umlaufrohr **18** befindet sich der Einleitungsstutzen **19** für das Rohgas, das den Kreislauf antreibt. Im Hohlgefäß **17** ist der Wärmetauscher **20** angeordnet, der das dreiphasige Gemisch, das aus dem Umlaufrohr **18** in das Hohlgefäß **17** eintritt, mittels Kühlwassers kühlt. Im oberen Teil des Hohlgefäßes **17** trennen sich Gas und Suspension. Die Suspension verläßt das Hohlgefäß **17** über den Überlaufstutzen **21**, und die Gasphase entweicht über den Gasabzugstutzen **22**.

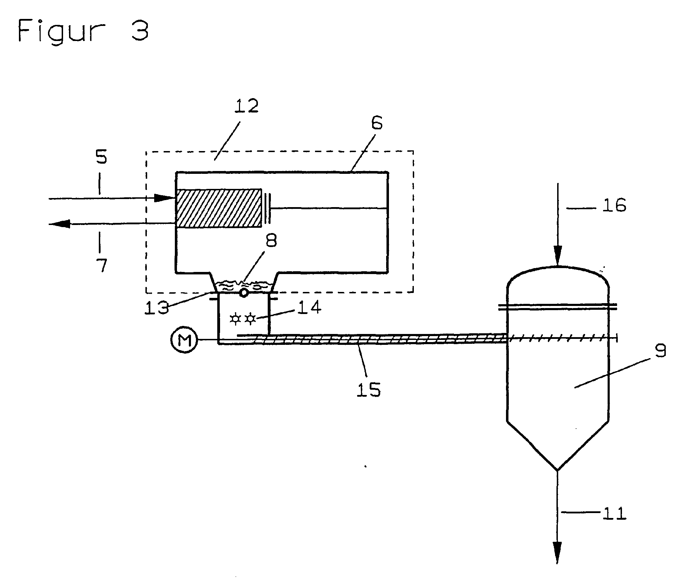

Figur 3 gibt eine mögliche Ausgestaltung einer Filter- und Lösevorrichtung in einer Anlage gemäß Figur 1 wieder, wie sie auch in der gleichzeitig anhängigen deutschen Patentanmeldung 100 30 252 beschrieben ist. In dem gasdicht abgeschlossenen Filterraum **12** befindet sich als Filtervorrichtung **6** eine Filterpresse, der die Suspension der Metallchloride in Chlorsilanen als Überlauf **5** zugeführt wird. Als Filterpressen eignen sich im Handel befindliche Apparate. In der Praxis bewährt hat sich die BHS Autopress von der Firma BHS, 87527 Sonthofen, BR Deutschland. Sie verfügt über vertikal angeordnete, plattenförmige Filterelemente und ist für die Zwecke der Erfindung mit Gewebe aus Edelstahl als Filtermaterial ausgestattet. Die Suspension wird in die Plattenzwischenräume gepumpt, und die Metallchloride scheiden sich auf den Außenseiten der Filterplatten ab, während die Chlorsilane **7** als Filtrat über Distanzstücke ablaufen, die zwischen den Filterplatten angeordnet sind. Wenn der Filterkuchen die Zwischenräume der Platten ausgefüllt hat, wird er gepreßt und anschließend mechanisch herausgeworfen. Bei der BHS Autopress laufen alle Arbeitsgänge automatisch ab.

Der Filterkuchen **8**, der infolge der Pressung recht fest ist, wird über eine inertisierte Schleuse **13** zunächst einem Zerkleinerer **14** zugeführt. Als Zerkleinerer eignen sich z.B. Stachelwalzen. Das zerkleinerte Metallchlorid wird mittels einer Förderschnecke **15** dem Lösegefäß **9** zugeführt, das z.B. ein Rührbehälter sein kannn, der über den Zulauf **16** mit Wasser oder verdünnter Salzsäure beschickt werden kann. Die entstehende saure Metallsalzlösung **11** wird dem Lösegefäß **9** entnommen und kann ohne weiteres einer Abwasserbehandlung zugeführt werden.

Die folgenden Beispiele sollen die Erfindung weiter erläutern, nicht aber ihren Umfang begrenzen, wie er sich aus den Patentansprüchen in Verbindung mit der Beschreibung und den Zeichnungen ergibt.

### Beispiel 1

Man arbeitet nach dem Schema der Figur 1 mit einem Kondensator gemäß Figur 2 und einer Filter- und Lösevorrichtung gemäß Figur 3. Das über den Einleitungsstutzen **19** zugeführte, 135°C heiße Rohgas **1** einer Chlorsilan-Synthese aus technischem Silizium und Chlorwasserstoff mit einem Metallchlorid-Gehalt von 1,05 kg auf 1.000 kg Chlorsilan wird in die flüssige Suspension **2** aus Metallchlorid und Chlorsilanen eingeleitet, die im Umlaufrohr **18** zirkuliert und eine Temperatur von 35°C hat. Das dreiphasige Gemisch aus der Suspension von Metallchloriden in flüssigem Chlorsilan und nicht kondensierten Anteilen des eingeleiteten Rohgases tritt in das Hohlgefäß **17** ein und durchströmt den mit Wasser von 23 °C gekühlten Wärmetauscher **20**, an dessen Ende es eine Temperatur von 34°C hat. Dort entweichen die nicht kondensierten Anteile **4** des Rohgases **1** durch den Gasabzugstutzen **22**, und die darin enthaltenen Chlorsilane werden durch Tieftemperaturkühlung bis -70°C abgeschieden.

Der Überlauf **5** der Suspension aus Metallchloriden in Chlorsilanen mit einem Metallchloridgehalt von 2,0 kg auf 1.000 kg Chlorsilane gelangt mit einer Temperatur von 34°C durch den Überlaufstutzen **21** auf die gekapselte und mit Stickstoff inertisierte Filterpresse **6**. Der dort anfallende Filterkuchen **8** hat einen Metallchloridgehalt von **51** Gew.-% und wird über die Feststoffschleuse **13**, den Zerkleinerer **14** und die Förderschnecke **15** dem Lösegefäß **9** zugeführt, das über den Zulauf **16** mit ca. 1 Kubikmeter/h Wasser beschickt wird. Die aus dem Lösegefäß **9** abgezogene wäßrige Metallsalzlösung **11** hat einen Metallchloridgehalt von 0,30 Gew.-%, einen Chlorwasserstoffgehalt von 0,23 Gew.-% und enthält geringe Mengen an Hydrolyseprodukten der im Filterkuchen enthalten gewesenen Chlorsilane. Sie wird einer Abwasserbehandlung zugeführt. Das Filtrat **7** wird zusammen mit den aus den nicht kondensierten Anteilen **4** des Rohgases **1** durch Tieftemperaturkühlung abgeschiedenen Chlorsilanen durch Destillation aufgearbeitet.

Auf den Kühlflächen und den anderen Anlageteilen sind auch nach mehrjährigem Betrieb nur geringe Ablagerungen vorhanden, die deren Funktion nicht beeinträchtigen.

### Beispiel 2

Man arbeitet im wesentlichen wie im Beispiel 1. Das Rohgas **1** hat jedoch eine Temperatur von 145°C und enthält ca. **24** kg Metallchloride und ca. 30 kg nicht umgesetzten Siliziumstaub auf 1.000 kg Chlorsilane. Die Suspension von Metallchloriden in Chlorsilanen, in die das Rohgas nach einer Trockenfiltration eingeleitet wird, weist eine Temperatur von 43°C auf. Das Rohgas wird innerhalb von weniger als 1 sec durch Direktkühlung mit dem flüssigen Chlorsilan auf 46°C abgekühlt. Dazu wird der Wärmetauscher **20** mit 6 Kubikmeter/h Kühlwasser von 21°C beaufschlagt.

Der Überlauf **5** der Suspension hat einen Gehalt an Metallchloriden von 1,4 kg auf 1.000 kg Chlorsilan und eine Temperatur von 46°C. Er wird einer Filterpresse **6** zugeführt, aus der periodisch ein Filterkuchen **8** mit ca. 85 Gew.-% Metallchloridanteil ausgestoßen wird. Der Filterkuchen wird wie in Beispiel 1 beschrieben der Lösevorrichtung **9** zugeführt, die mit 1 Kubikmeter/h Wasser beaufschlagt wird. Die entstehende wäßrige Lösung **11** mit einem Metallchlorid-Gehalt von 0,24 Gew.-% und einem Chlorwasserstoffanteil von 0,04 Gew.-% wird einer Abwasserbehandlungsanlage zugeführt.

Das Filtrat **7** wird zusammen mit den durch eine mehrstufige Tieftemperaturkondensation (bis zu -53°C) aus den nicht kondensierten Anteilen **4** des Rohgases **1** abgetrennten Chlorsilanen durch Destillation aufgearbeitet.

## Patentansprüche

1. Verfahren zur Abtrennung von Metallchloriden aus dem bei der Umsetzung von technischem Silizium mit Chlorwasserstoff entstehenden heißen, gasförmigen Reaktionsgemisch (Rohgas), **dadurch gekennzeichnet, daß** man das Rohgas in eine im Kreis geführte Suspension von Metallchloriden in Chlorsilanen einleitet, die Temperatur des Rohgases von dessen Einleitungstemperatur bis zur Temperatur des bei der Einleitung entstehenden dreiphasigen Gas/Flüssigkeits/Feststoff-Gemisches zum Teil durch direkte, durch Verdampfung von Chlorsilanen bewirkte Kühlung und zum Teil durch indirekte Kühlung absenkt, einen Teil der entstandenen Suspension von Metallchloriden in flüssigen Chlorsilanen zur Einleitungsstelle des Rohgases zurückführt und aus dem anderen Teil der Suspension die Metallchloride abtrennt.

2. Verfahren nach Anspruch 1, **dadurch gekennzeichnet, daß** man das Verfahren kontinuierlich oder halbkontinuierlich durchführt.

3. Verfahren nach Anspruch 1 oder 2, **dadurch gekennzeichnet, daß** man das Verfahren unter Atmosphärendruck oder erhöhtem Druck von bis zu etwa 5 bar durchführt.

4. Verfahren nach einem der Ansprüche 1 bis 3, **dadurch gekennzeichnet, daß** man das gasförmige Reaktionsgemisch mit hoher Geschwindigkeit in die im Kreis geführte flüssige Suspension von Metallchloriden in Chlorsilanen einführt.

5. Verfahren nach einem der Ansprüche 1 bis 4, **dadurch gekennzeichnet, daß** man das gasförmige Reaktionsgemisch mit einer solchen Geschwindigkeit und in einer solchen Menge pro Zeiteinheit in die Suspension einleitet, daß eine Lineargeschwindigkeit des entstehenden Gas/Flüssigkeits/Feststoff-Gemisches von 2 bis 8 m/s resultiert.

6. Verfahren nach einem der Ansprüche 1 bis 5, **dadurch gekennzeichnet, daß** man die Metallchloride aus dem nicht zurückgeführten Teil der Suspension entfernt, indem man die Suspension einer Filtervorrichtung zuführt, in der Metallchloride und Chlorsilane unter Druck getrennt werden.

7. Verfahren nach Anspruch 6, **dadurch gekennzeichnet, daß** man die festen Metallchloride aus ihrer Suspension in Chlorsilanen abtrennt, indem man die Suspension unter Luft- und Feuchtigkeitsausschluß in einer inertisierten Zone, zweckmäßig unter Druck, in eine feste und eine flüssige Phase trennt, die feste Phase in einer inertisierten Zone zerkleinert, die zerkleinerte feste Phase einer Lösungszone zuführt, in der die Metallchloride zu einer wäßrige Metallchlorid-Lösung gelöst werden, und aus der flüssigen Phase durch Destillation die einzelnen Chlorsilane gewinnt.

8. Verfahren nach einem der Ansprüche 1 bis 8, **dadurch gekennzeichnet, daß** man aus dem Rohgas vor dessen Einleitung in die Suspension von Metallchloriden in Chlorsilanen Siliziumstaub sowie einen Teil der Metallchloride in Zyklonen oder Filterapparaten trocken abtrennt.

9. Apparat (Kondensator) für die Kondensation der Chlorsilane und der Metallchloride des Rohgases aus der Umsetzung von technischem Silizium mit Chlorwasserstoff, **gekennzeichnet, durch** ein Hohlgefäß **17** mit vorzugsweise zylindrischem Querschnitt und vorzugsweise einer konischen Verjüngung im unteren Teil; ein äußeres Umlaufrohr **18**; einen Rohgaseinleitungsstutzen **19**, einen in dem Hohlgefäß **17** angeordneten Wärmetauscher **20;** einen Überlaufstutzen **21** und einen Gasabzugstutzen **22.**

10. Filter- und Lösevorrichtung für die Abtrennung und weitere Behandlung der Metallchloride aus dem gemäß Anspruch 1 nicht zurückgeführten Teil der Suspension, **gekennzeichnet durch** einen gasdichten Filterraum **12**; eine darin eingeschlossene Filtervorrichtung **6**; eine Zuführung für die Suspension **5**; einen Abzug für flüssige Chlorsilane **7**; eine Fördervorrichtung **15** für den zerkleinerten Filterkuchen und ein Lösegefäß **9** mit einer Zuführung **16** für Wasser oder Salzsäure und einem Abzug **11** für die saure Metallsalzlösung.

11. Vorrichtung nach Anspruch 10, **dadurch gekennzeichnet, daß** die Filtervorrichtung **6** eine Filterpresse ist.
